# EUROPEAN PATENT APPLICATION

(11) **EP 4 790 889 A1**
(43) Date of publication of application: **12.08.2026**
(21) Application number: 25156240.1
(22) Date of filing: 06.02.2025
(51) Int. Cl.: H02P 3/12, H02P 3/22

(54) **COMBINED INDUCTION-TYPE ELECTRICAL MACHINE AND BRAKING ARRANGEMENT**

(71) Applicant: Volvo Truck Corporation, 405 08 Göteborg (SE)
(72) Inventor: LAINE, Leo, 414 84 GÖTEBORG (SE); LINDBERG, Johan, 415 33 GÖTEBORG (SE); STENBRATT, Ulf, 434 94 VALLDA (SE)
(74) Representative: Kransell & Wennborg KB

(57) **Abstract**

A combined induction-type electrical machine and braking arrangement (19) for use in a heavy vehicle (3) comprises a stator (23) configured to be coupled to a body (7) of the vehicle (3), the stator comprising stator windings; a rotor (25) configured to be coupled to at least one wheel (9) of the vehicle (3), the rotor (25) comprising rotor conductors (31a-c; 41a-c; 43a-c); a configuration switching arrangement (33) coupled to the rotor conductors (31a-c; 41a-c; 43a-c) of the rotor (25) and controllable to switch between a first configuration, in which induced current flowing through the rotor conductors (31a-c; 41a-c; 43a-c) experiences a first total resistance, and a second configuration, in which the induced current experiences a second total resistance, higher than the first total resistance; and a controller (29) configured to control the configuration switching arrangement (33) from the first configuration to the second configuration in response to a braking command.

## Description

### TECHNICAL FIELD

The disclosure relates generally to an electrical machine, and to a method of controlling the electrical machine. In particular aspects, the disclosure relates to a combined induction-type electrical machine and braking arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electrical commercial vehicles tend to use primarily regenerative braking instead of friction brakes to minimize energy consumption and thus maximize driving range. There are however situations where this is not possible due to limitations in the energy storage system (battery) due to high state-of-charge (SOC), high/low temperatures or other reasons.

One solution is to use the friction brakes. This however comes with other challenges as particle emissions, cost/downtime for maintenance, sizing of the friction brakes for this edge case, and additional noise. There is also the well-known issue of brake-fading of the service brakes.

It would be desirable to provide for a reduced use of friction brakes.

### SUMMARY

According to a first aspect of the disclosure, there is provided a combined induction-type electrical machine and braking arrangement for use in a heavy vehicle, comprising: a stator configured to be coupled to a body of the vehicle, the stator comprising stator windings; a rotor configured to be coupled to at least one wheel of the vehicle, the rotor comprising rotor conductors; a configuration switching arrangement coupled to the rotor conductors of the rotor and controllable to switch between: a first configuration in which induced current flowing through the rotor conductors experiences a first total resistance; and a second configuration in which induced current flowing through the rotor conductors experiences a second total resistance, higher than the first total resistance; and a controller configured to control the configuration switching arrangement from the first configuration to the second configuration in response to a braking command. The first aspect of the disclosure may seek to provide an induction machine that can be used both as a traction motor and as an electromagnetic brake. The present inventors have realized that subjecting the induced current flowing through the rotor conductors to a relatively low resistance provides for relatively efficient operation as a traction motor, and subjecting the induced current flowing through the rotor conductors to a relatively high resistance provides for relatively efficient operation as an electromagnetic brake. The inventors have further realized that these properties can be combined by providing a configuration switching arrangement controllable to switch between configurations in which the induced current flowing through the rotor conductors experience different resistance. Hereby, more efficient electromagnetic braking can be achieved in a vehicle provided with the combined induction-type electrical machine and braking arrangement, which in turn allows for reduced use of a friction brake, providing for reduced maintenance costs, and emissions. Hereby, the vehicle may be equipped with a more compact friction brake system, or even completely without a friction brake system, enabling potential weight and cost savings.

Optionally in some examples, including in at least one preferred example, the configuration switching arrangement may comprise a first set of switches and a second set of switches. The first configuration may be achieved by controlling the first set of switches to be conducting and the second set of switches to be non-conducting, thereby allowing the induced current to flow through a first current path defined by the first set of switches. The second configuration may be achieved by controlling the first set of switches to be non-conducting and the second set of switches to be conducting, thereby allowing the induced current to flow through a current path defined by the second set of switches. This configuration may provide the technical benefit of enabling efficient switching between traction and braking modes by dynamically adjusting the resistance experienced by the induced current. In particular, this may enhance braking performance while minimizing energy losses, which can contribute to improved vehicle control and a reduced reliance on friction brakes.

Suitable switches for the configuration switching arrangement may include high-power semiconductor devices such as insulated gate bipolar transistors (IGBTs), metal-oxide-semiconductor field-effect transistors (MOSFETs) designed for high-current applications, or thyristors such as gate turn-off thyristors (GTOs) and silicon-controlled rectifiers (SCRs). IGBTs may be particularly suitable due to their ability to handle high voltages and large currents with relatively low switching losses, making them well-suited for induction motor applications. Alternatively, GTOs or SCRs can be used in scenarios where robust operation under high-power conditions is required, particularly in heavy-duty vehicle applications where electromagnetic braking demands reliable and efficient current control.

Optionally, in some examples, including in at least one preferred example, the configuration switching arrangement may comprise a set of resistive elements. Each switch within the first set of switches may be arranged to short-circuit a corresponding resistive element of the set of resistive elements when controlled to be conducting, and each switch within the second set of switches may be arranged to allow current to flow through a corresponding resistive element of the set of resistive elements when controlled to be conducting. This configuration may provide the technical benefit of achieving two distinct current paths with different resistance levels without requiring twice the number of rotor conductors. In particular, this may enable the advantages of having dual sets of rotor conductors-such as the above-mentioned combination of improved motor efficiency and enhanced braking performance-without the added weight, material costs, and complexity associated with physically doubling the rotor windings. The timing of the switching between the first and second configurations may be controlled in different ways depending on the desired performance characteristics. The controller may be configured to substantially simultaneously operate the first and second sets of switches, ensuring a direct transition between the configurations without an intermediate state. This may help to minimize transient effects and maintain consistent performance. Alternatively, a brief overlap or delay between the switching actions may be introduced to manage current flow dynamics, reduce electrical stress on components, or optimize braking smoothness. The choice of switching timing may depend on factors such as system design, operating conditions, and the specific requirements for traction and braking performance.

Optionally, in some examples, including in at least one preferred example, the set of resistive elements may comprise at least one resistive element for each rotor conductor of the rotor. Each switch within the first set of switches may be arranged to interrupt a corresponding rotor conductor when controlled to be non-conducting, and each switch within the second set of switches may be arranged to allow induced current to flow through an interrupted rotor conductor by providing a bypass current path through a corresponding resistive element when controlled to be conducting. This configuration may provide the technical benefit of selectively modifying the effective rotor resistance without requiring additional winding structures. In particular, this may allow for an adaptable and space-efficient rotor design that enables efficient traction and braking performance while minimizing added weight and complexity in the rotor assembly.

Optionally, in some examples, including in at least one preferred example, the rotor may be a squirrel cage rotor, where each rotor conductor is provided in the form of a conducting bar extending between a first end ring and a second end ring, and each switch of the first set of switches may be arranged along a corresponding conducting bar. This configuration may provide the technical benefit of enabling direct control over the electrical properties of individual rotor bars without requiring modifications to the end rings. In particular, this may facilitate efficient switching between traction and braking modes while maintaining the mechanical simplicity and robustness associated with squirrel cage rotor designs.

Optionally, in some examples, including in at least one preferred example, each switch may be implemented as a temperature-dependent switch, for example, a bimetal switch. This configuration may provide the technical benefit of enabling passive and automatic switching based on operating temperature, reducing the need for external control signals or complex electronic switching mechanisms. In particular, this may enhance reliability and durability by ensuring that the switching behavior adapts to thermal conditions, which can be beneficial for maintaining optimal braking performance and protecting system components from excessive heat buildup.

Alternatives to using a temperature-dependent switch may include using control signals based on electrical or electromagnetic inputs. A dedicated control signal from the vehicle's electronic control unit (ECU) may activate the switches based on braking demands, motor operating conditions, or sensor inputs such as speed, torque, or temperature. A stator current pulse, such as a D-axis current pulse, may be used to trigger switching directly on the rotor, allowing seamless integration with existing motor control strategies. Wireless or contactless control mechanisms, such as inductive or capacitive coupling, may transmit control signals to switches rotating with the rotor without requiring physical connections. Additionally, rotor-mounted sensing and control circuits could autonomously determine the optimal switching state based on real-time operating conditions, reducing dependency on external controllers. The choice of control signal may depend on factors such as system complexity, response time, and integration with existing vehicle control architectures.

Optionally, in some examples, including in at least one preferred example, the rotor conductors may be implemented as rotor windings, and the combined induction-type electrical machine and braking arrangement may comprise slip rings mounted on a rotor shaft and connected to the rotor windings. The set of resistive elements, the first set of switches, and the second set of switches may be arranged outside the rotor and connected to respective slip rings by means of sliding connections. This configuration may provide the technical benefit of enabling stationary switching components, which simplifies the delivery of control signals and allows for the use of more conventional and robust switching technologies. In particular, placing the switching elements outside the rotor may improve maintainability, reduce the complexity of integrating power electronics within a rotating system, and facilitate more precise and efficient control of rotor resistance for both traction and braking operation.

Optionally, in some examples, including in at least one preferred example, the rotor may comprise a first set of rotor conductors, each exhibiting a first rotor conductor resistance, and a second set of rotor conductors, each exhibiting a second rotor conductor resistance, higher than the first rotor conductor resistance. Each switch of the first set of switches may be arranged to interrupt a corresponding rotor conductor of the first set when controlled to be non-conducting, and each switch of the second set of switches may be arranged to interrupt a corresponding rotor conductor of the second set when controlled to be non-conducting. This configuration may provide the technical benefit of distributing heat generation more evenly across the rotor, as different resistance levels can be integrated directly into the rotor conductors rather than relying on discrete components. In particular, this may improve thermal management, reducing localized overheating and enhancing the durability and reliability of the braking system while maintaining efficient control over traction and braking performance.

Optionally, in some examples, including in at least one preferred example, each rotor conductor of the first set of rotor conductors may be made of copper or aluminum, and each rotor conductor of the second set of rotor conductors may be made of iron or steel. This configuration may provide the technical benefit of leveraging the high electrical conductivity of copper or aluminum to minimize resistive losses during motoring operation, improving efficiency and reducing energy consumption. Meanwhile, the higher resistivity of iron or steel may enhance braking performance by increasing induced current resistance, thereby generating stronger braking torque. In particular, this may provide a well-balanced rotor design that optimizes both traction and braking efficiency without requiring additional external resistive components.

Optionally, in some examples, including in at least one preferred example, the rotor may be a squirrel cage rotor, where each rotor conductor of the first set of rotor conductors may be provided in the form of a first conducting bar extending between a first end ring and a second end ring, and each rotor conductor of the second set of rotor conductors may be provided in the form of a second conducting bar extending between the first and second end rings. Each switch of the first set of switches may be arranged along a corresponding first conducting bar, and each switch of the second set of switches may be arranged along a corresponding second conducting bar. This configuration may provide the technical benefit of allowing distinct resistance characteristics for motoring and braking without altering the fundamental squirrel cage rotor design. In particular, this may enable straightforward manufacturing using established casting or bar-insertion techniques while maintaining compatibility with conventional rotor structures, thereby simplifying production and integration into existing motor architectures.

Optionally, in some examples, including in at least one preferred example, each switch may be implemented as a temperature-dependent switch, for example, a bimetal switch. This configuration may provide the technical benefit of enabling passive and self-regulating switching between motoring and braking modes based on operating temperature. In particular, this may allow the rotor resistance to adjust automatically in response to thermal conditions, reducing the need for external control signals while enhancing system reliability and operational robustness in varying load and braking scenarios.

Optionally, in some examples, including in at least one preferred example, each rotor conductor of the first set of rotor conductors may be provided in the form of a first rotor winding, and each rotor conductor of the second set of rotor conductors may be provided in the form of a second rotor winding. The combined induction-type electrical machine and braking arrangement may comprise a first set of slip rings mounted on a rotor shaft and connected to the first set of rotor windings, and a second set of slip rings mounted on the rotor shaft and connected to the second set of rotor windings. The first set of switches may be arranged outside the rotor and connected to respective slip rings of the first set by means of sliding connections, and the second set of switches may be arranged outside the rotor and connected to respective slip rings of the second set by means of sliding connections. This configuration may provide the technical benefit of enabling independent control of multiple rotor winding paths with different resistances while keeping the switching components stationary. In particular, this may simplify the delivery of control signals, facilitate the use of conventional switching technologies, and improve system maintainability by eliminating the need for rotating switches within the rotor assembly.

Optionally, in some examples, including in at least one preferred example, the controller may be configured to control the configuration switching arrangement from the first configuration to the second configuration by providing a stator current pulse. This configuration may provide the technical benefit of enabling seamless and contactless switching by leveraging existing stator windings to trigger the transition between motoring and braking modes. In particular, this may simplify system integration by eliminating the need for additional signal transmission components, avoid wear associated with mechanical switching mechanisms, and allow for precise and responsive control of rotor resistance adjustments.

Optionally, in some examples, including in at least one preferred example, the controller may be configured to control the configuration switching arrangement from the second configuration to the first configuration in response to a propulsion command. This configuration may provide the technical benefit of ensuring a smooth and timely transition from braking to motoring mode based on driving demands. In particular, this may enable efficient torque delivery when propulsion is required, enhancing vehicle responsiveness and optimizing energy usage by dynamically adjusting rotor resistance to match operating conditions.

Optionally, in some examples, including in at least one preferred example, the controller may be configured to control the configuration switching arrangement from the second configuration to the first configuration by providing a stator current pulse. This configuration may provide the technical benefit of enabling a contactless and efficient transition from braking to motoring mode without requiring additional signal transmission components. In particular, this may simplify system integration, avoid wear associated with mechanical switching mechanisms, and ensure a rapid and reliable response to propulsion commands, improving overall drivability and energy efficiency.

Optionally, in some examples, including in at least one preferred example, the combined induction-type electrical machine and braking arrangement according to examples of the first aspect may be comprised in a vehicle, further comprising a body and at least one wheel. The stator of the combined induction-type electrical machine and braking arrangement may be coupled to the body of the vehicle, and the rotor of the combined induction-type electrical machine and braking arrangement may be coupled to the at least one wheel.

According to a second aspect of the disclosure, there is provided a computer-implemented method comprising receiving a braking command for braking at least one wheel of a vehicle and controlling, in response to the braking command, the configuration switching arrangement of the combined induction-type electrical machine and braking arrangement according to examples of the first aspect from the first configuration to the second configuration. The second aspect of the disclosure may seek to provide a control method that enables efficient and timely switching between motoring and braking modes. The present inventors have realized that dynamically adjusting the rotor resistance in response to a braking command allows for improved electromagnetic braking performance. Hereby, more efficient electromagnetic braking can be achieved in a vehicle provided with the combined induction-type electrical machine and braking arrangement, which in turn allows for reduced use of a friction brake, providing for reduced maintenance costs, and emissions. Hereby, the vehicle may be equipped with a more compact friction brake system, or even completely without a friction brake system, enabling potential weight and cost savings.

Optionally, in some examples, including in at least one preferred example, the method may further comprise receiving a propulsion command for propelling at least one wheel of the vehicle and controlling, in response to the propulsion command, the configuration switching arrangement of the combined induction-type electrical machine and braking arrangement from the second configuration to the first configuration. This configuration may provide the technical benefit of ensuring a smooth and efficient transition from braking to motoring mode without delays or unnecessary energy losses. In particular, this may improve vehicle responsiveness and energy efficiency by dynamically adapting the rotor resistance to match propulsion demands, thereby optimizing performance in both driving and braking conditions.

According to a third aspect of the disclosure, there is provided a computer program product comprising program code for performing, when executed by processing circuitry comprised in the controller of the combined induction-type electrical machine and braking arrangement of the first aspect of the disclosure, the method of the second aspect of the disclosure.

According to a fourth aspect of the disclosure, there is provided a non-transitory computer-readable storage medium comprising instructions, which when executed by processing circuitry comprised in the controller of the combined induction-type electrical machine and braking arrangement of the first aspect of the disclosure, cause the processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary axle according to an example.
**FIG. 3** is an exemplary combined induction-type electrical machine and braking arrangement according to an example.
**FIG. 4A** is an exemplary rotor of the combined induction-type electrical machine and braking arrangement in FIG. 3 in a first configuration.
**FIG. 4B** is an exemplary rotor of the combined induction-type electrical machine and braking arrangement in FIG. 3 in a second configuration.
**FIG. 5A** is an exemplary rotor of the combined induction-type electrical machine and braking arrangement in FIG. 3 in a first configuration.
**FIG. 5B** is an exemplary rotor of the combined induction-type electrical machine and braking arrangement in FIG. 3 in a second configuration.
**FIG. 6** is an exemplary rotor of the combined induction-type electrical machine and braking arrangement in FIG. 3.
**FIG. 7A** is an example of the combined induction-type electrical machine and braking arrangement in FIG. 3 in a first configuration.
**FIG. 7B** is an example of the combined induction-type electrical machine and braking arrangement in FIG. 3 in a second configuration.
**FIG. 8** is an exemplary method according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

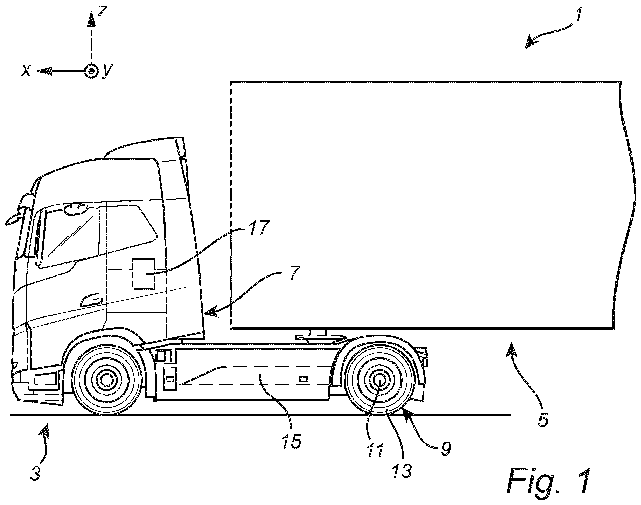

FIG. 1 illustrates an exemplary vehicle 3 according to an example. The vehicle 3 comprises a body 7 and at least one wheel 9. The wheel 9 is configured to rotate around a rotational axis 11 and is provided with a tire 13. The vehicle 3 further comprises a battery 15. The vehicle 3 also comprises a combined induction-type electrical machine and braking arrangement 19 (not shown in FIG. 1).

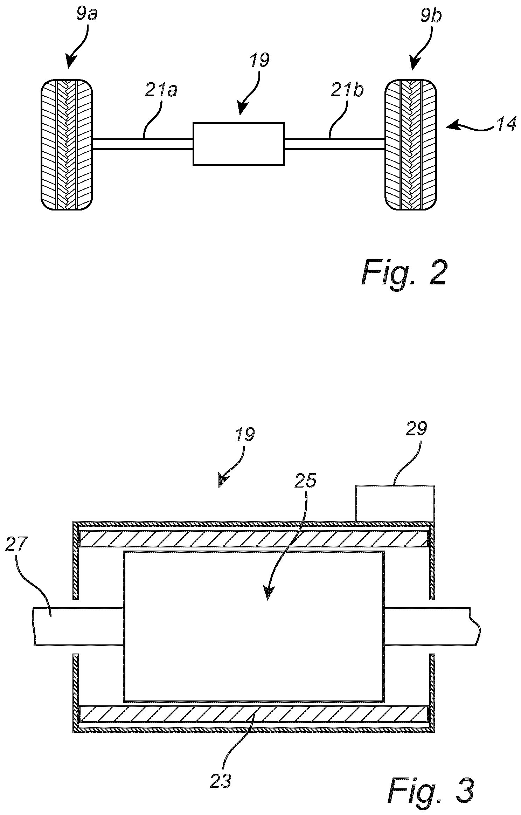

FIG. 2 illustrates an exemplary axle 14 according to an example. The axle 14 comprises a combined induction-type electrical machine and braking arrangement 19, arranged to propel and/or brake the wheels 9a-b via corresponding half shafts 21a-b. This configuration is merely an example, and variations are possible. There may be one combined induction-type electrical machine and braking arrangement 19 arranged and configured to propel and/or brake a larger or smaller number of wheels 9a-b. According to one example, the combined induction-type electrical machine and braking arrangement 19 may be connected to one or more wheels 9a-b via a transmission (not shown). According to another example, the combined induction-type electrical machine and braking arrangement 19 may be integrated into the wheel 9a-b.

FIG. 3 illustrates an exemplary combined induction-type electrical machine and braking arrangement 19 according to an example. The arrangement 19 comprises a stator 23 and a rotor 25. The rotor 25 is shown as including a shaft 27, which may be directly or indirectly coupled to at least one wheel 9a-b, such as via the half shafts 21a-b shown in FIG. 2. A configuration switching arrangement (not shown in FIG. 3) is controllable to switch between different configurations for the combined induction-type electrical machine and braking arrangement 19. The combined induction-type electrical machine and braking arrangement 19 further comprises a controller 29 configured to control the configuration switching arrangement 33.

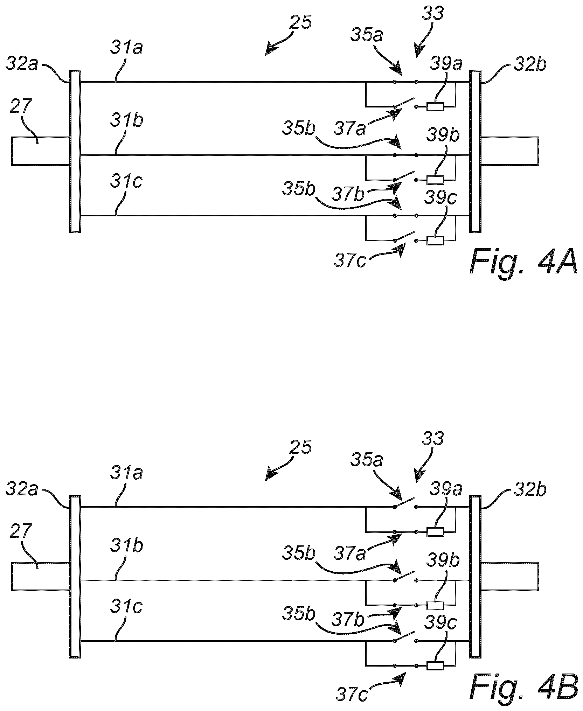

FIGS. 4A and 4B illustrate one example of a rotor 25 of the squirrel cage type, which may be comprised in the combined induction-type electrical machine and braking arrangement 19 shown in FIG. 3. The rotor 25 includes rotor conductors 31a-c extending between a first end ring 32a and a second end ring 32b. A configuration switching arrangement 33 is coupled to the rotor 25 and is controllable to switch between a first configuration and a second configuration. In the first configuration, the induced current flowing through the rotor conductors 31a-c experiences a first total resistance, which is relatively low and suitable for propulsion. In the second configuration, the induced current experiences a second total resistance, which is higher and suitable for braking.

FIG. 4A illustrates the rotor 25 in the first configuration for an example where the rotor 25 is of the squirrel cage type and comprises a set of resistive elements 39a-c. Each rotor conductor is provided in the form of a conducting bar 31a-c, made of a material with relatively low electrical resistance, such as copper or aluminum, extending between a first end ring 32a and a second end ring 32b. The configuration switching arrangement 33 comprises a first set of switches 35a-c and a second set of switches 37a-c. In the first configuration, the first set of switches 35a-c is controlled to be conducting, while the second set of switches 37a-c is controlled to be non-conducting. Hereby, each switch of the first set of switches 35a-c short-circuits a corresponding resistive element 39a-c, allowing the induced current to flow through a first current path defined by the conducting bars 31a-c with relatively low resistance, which is suitable for propulsion.

FIG. 4B illustrates the rotor 25 in the second configuration for an example where the rotor 25 is of the squirrel cage type and comprises a set of resistive elements 39a-c. Each rotor conductor is provided in the form of a conducting bar 31a-c, made of a material with relatively low electrical resistance, such as copper or aluminum, extending between a first end ring 32a and a second end ring 32b. The configuration switching arrangement 33 comprises a first set of switches 35a-c and a second set of switches 37a-c. In the second configuration, the first set of switches 35a-c is controlled to be non-conducting, while the second set of switches 37a-c is controlled to be conducting. Hereby, each switch of the second set of switches 37a-c allows the induced current to flow through a corresponding resistive element 39a-c, providing a bypass current path through the resistive elements 39a-c. This results in a higher total resistance for the induced current, which is suitable for braking.

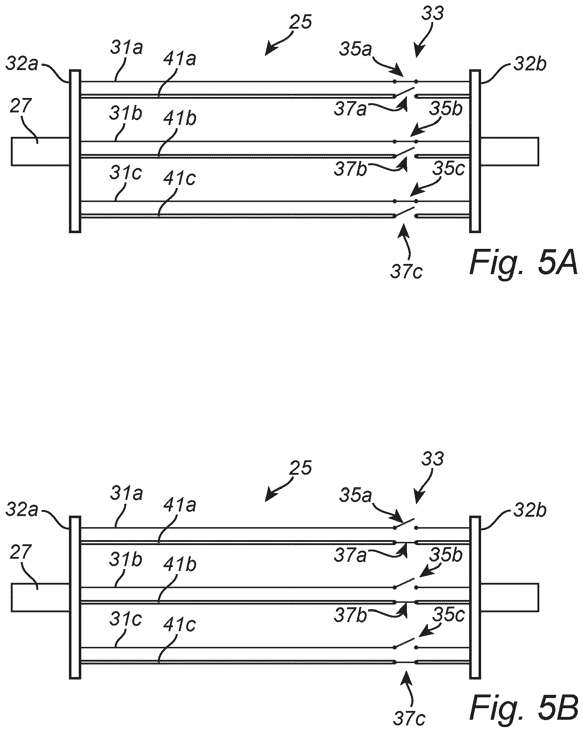

FIGS. 5A and 5B illustrate one example of a rotor 25 of the squirrel cage type, which may be comprised in the combined induction-type electrical machine and braking arrangement 19 shown in FIG. 3. The rotor 25 includes a first set of rotor conductors 31a-c and a second set of rotor conductors 41a-c, each extending between a first end ring 32a and a second end ring 32b. The configuration switching arrangement 33 is coupled to the rotor 25 and is controllable to switch between a first configuration and a second configuration. In the first configuration, the induced current flows through the first set of rotor conductors 31a-c, which are made of a material with relatively low electrical resistance, such as copper or aluminum, resulting in a first total resistance that is relatively low and suitable for propulsion. In the second configuration, the induced current flows through the second set of rotor conductors 41a-c, which are made of a material with higher electrical resistance, such as iron or steel, resulting in a second total resistance that is higher and suitable for braking.

FIG. 5A illustrates the rotor 25 in the first configuration for an example where the rotor 25 is of the squirrel cage type and comprises a first set of rotor conductors 3 1a-c and a second set of rotor conductors 41a-c. Each rotor conductor of the first set 3 1a-c is provided in the form of a first conducting bar extending between a first end ring 32a and a second end ring 32b and is made of a material with relatively low electrical resistance, such as copper or aluminum. Each rotor conductor of the second set 41a-c is provided in the form of a second conducting bar extending between the first end ring 32a and the second end ring 32b and is made of a material with higher electrical resistance, such as iron or steel. The configuration switching arrangement 33 comprises a first set of switches 35a-c and a second set of switches 37a-c. In the first configuration, the first set of switches 35a-c is controlled to be conducting, while the second set of switches 37a-c is controlled to be non-conducting. Hereby, the induced current flows through the first conducting bars 3 1a-c, resulting in a relatively low total resistance, which is suitable for propulsion.

FIG. 5B illustrates the rotor 25 in the second configuration for an example where the rotor 25 is of the squirrel cage type and comprises a first set of rotor conductors 3 1a-c and a second set of rotor conductors 41a-c. Each rotor conductor of the first set 3 1a-c is provided in the form of a first conducting bar extending between a first end ring 32a and a second end ring 32b and is made of a material with relatively low electrical resistance, such as copper or aluminum. Each rotor conductor of the second set 41a-c is provided in the form of a second conducting bar extending between the first end ring 32a and the second end ring 32b and is made of a material with higher electrical resistance, such as iron or steel. The configuration switching arrangement 33 comprises a first set of switches 35a-c and a second set of switches 37a-c. In the second configuration, the first set of switches 35a-c is controlled to be non-conducting, while the second set of switches 37a-c is controlled to be conducting. Hereby, the induced current flows through the second conducting bars 41a-c, resulting in a higher total resistance, which is suitable for braking.

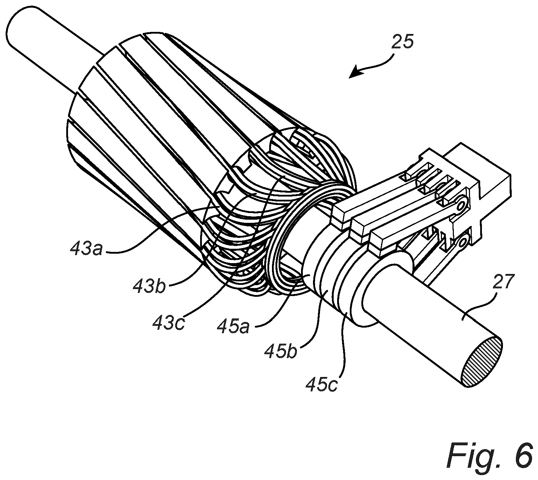

FIG. 6 illustrates an exemplary rotor 25 of the combined induction-type electrical machine and braking arrangement 19 shown in FIG. 3. In this example, the rotor 25 comprises rotor windings 43a-c instead of conducting bars. The rotor windings 43a-c are connected to slip rings 45a-c, which are mounted on the rotor shaft 27. The slip rings 45a-c enable electrical connection to external circuitry while allowing the rotor windings 43a-c to rotate with the rotor 25.

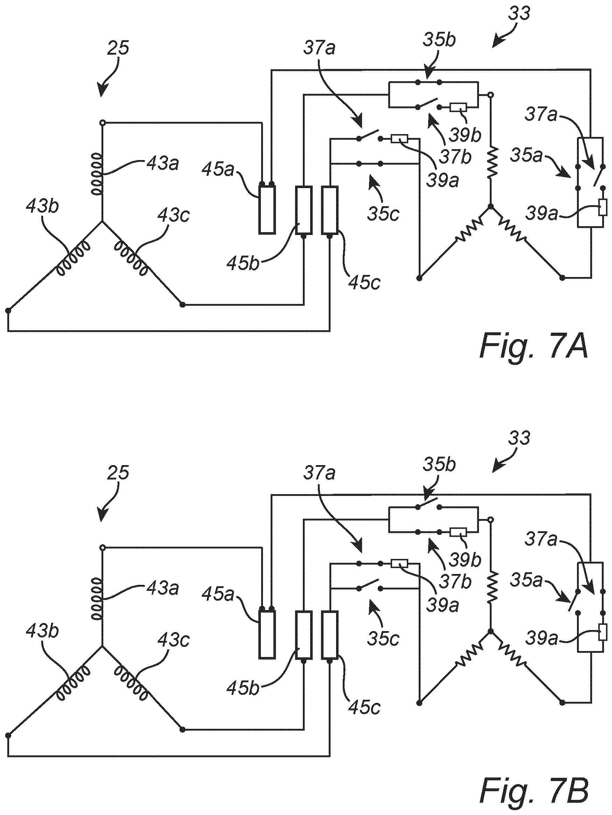

FIG. 7A illustrates the rotor 25 in the first configuration for an example where the rotor 25 comprises rotor windings 43a-c and slip rings 45a-c. Each rotor winding 43a-c may be made of a material with relatively low electrical resistance, such as copper or aluminum. The configuration switching arrangement 33 comprises a first set of switches 35a-c and a second set of switches 37a-c, similar to the configuration shown in FIG. 4A, but with the switches and resistive elements connected to the slip rings 45a-c instead of directly to rotor conductors. Each slip ring 45a-c is connected to ground, either directly via a resistor or through a corresponding resistive element 39a-c in series with a resistor. In the first configuration, the first set of switches 35a-c is controlled to be conducting, while the second set of switches 37a-c is controlled to be non-conducting. Hereby, each switch of the first set of switches 35a-c short-circuits a corresponding resistive element 39a-c, allowing the induced current to flow through a first current path defined by the rotor windings 43a-c and the resistors, resulting in a relatively low total resistance, which is suitable for propulsion.

FIG. 7B illustrates the rotor 25 in the second configuration for an example where the rotor 25 comprises rotor windings 43a-c and slip rings 45a-c. Each rotor winding 43a-c may be made of a material with relatively low electrical resistance, such as copper or aluminum. The configuration switching arrangement 33 comprises a first set of switches 35a-c and a second set of switches 37a-c, similar to the configuration shown in FIG. 4B, but with the switches and resistive elements connected to the slip rings 45a-c instead of directly to rotor conductors. Each slip ring 45a-c is connected to ground, either directly via a resistor or through a corresponding resistive element 39a-c in series with a resistor. In the second configuration, the first set of switches 35a-c is controlled to be non-conducting, while the second set of switches 37a-c is controlled to be conducting. Hereby, each switch of the second set of switches 37a-c allows the induced current to flow through a corresponding resistive element 39a-c, providing a bypass current path through the resistive elements 39a-c and the resistors. This results in a higher total resistance, which is suitable for braking.

The rotor 25 shown in FIG. 6 may alternatively include a first set of rotor windings and a second set of rotor windings, in analogy with the example shown in FIGS. 5A-B. In such an implementation, the combined induction-type electrical machine and braking arrangement 19 may comprise a first set of slip rings mounted on the rotor shaft 27 and connected to the first set of rotor windings, and a second set of slip rings mounted on the rotor shaft 27 and connected to the second set of rotor windings. The first set of switches may be arranged outside the rotor 25 and connected to respective slip rings of the first set by means of sliding connections, while the second set of switches may be arranged outside the rotor 25 and connected to respective slip rings of the second set by means of sliding connections.

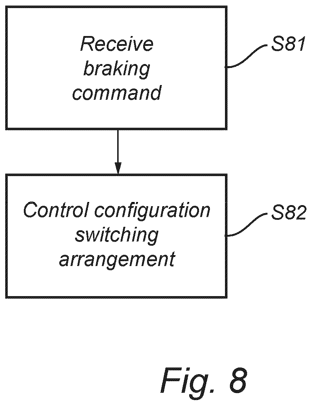

FIG. 8 illustrates an exemplary method according to an example. The method comprises receiving S81 a braking command for braking at least one wheel 9 of a vehicle 3. In response to the braking command, the method further comprises controlling S82 the configuration switching arrangement 33 of the combined induction-type electrical machine and braking arrangement 19 from the first configuration to the second configuration.

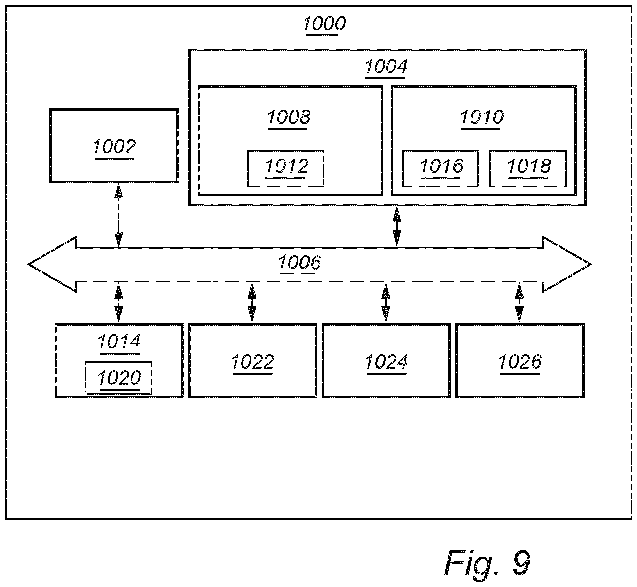

Fig. 9 is a schematic diagram of a computer system 1000 for implementing examples disclosed herein, such as for implementing examples of the controller 29 of the combined induction-type electrical machine and braking arrangement 19 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A combined induction-type electrical machine and braking arrangement for use in a heavy vehicle, comprising: a stator configured to be coupled to a body of the vehicle, the stator comprising stator windings; a rotor configured to be coupled to at least one wheel of the vehicle, the rotor comprising rotor conductors; a configuration switching arrangement coupled to the rotor conductors of the rotor and controllable to switch between: a first configuration in which induced current flowing through the rotor conductors experiences a first total resistance; and a second configuration in which induced current flowing through the rotor conductors experiences a second total resistance, higher than the first total resistance; and a controller configured to control the configuration switching arrangement from the first configuration to the second configuration in response to a braking command.

Example 2: The combined induction-type electrical machine and braking arrangement of example 1, wherein: the configuration switching arrangement comprises a first set of switches and a second set of switches; the first configuration is achieved by controlling the first set of switches to be conducting and the second set of switches to be non-conducting, thereby allowing the induced current to flow through a first current path defined by the first set of switches; and the second configuration is achieved by controlling the first set of switches to be non-conducting and the second set of switches to be conducting, thereby allowing the induced current to flow through a current path defined by the second set of switches.

Example 3: The combined induction-type electrical machine and braking arrangement of example 2, wherein: the configuration switching arrangement comprises a set of resistive elements; each switch of the first set of switches is arranged to short-circuit a corresponding resistive element of the set of resistive elements when controlled to be conducting; and each switch of the second set of switches is arranged to allow current to flow through a corresponding resistive element of the set of resistive elements when controlled to be conducting.

Example 4: The combined induction-type electrical machine and braking arrangement of example 3, wherein: the set of resistive elements comprises at least one resistive element for each rotor conductor of the rotor; each switch of the first set of switches is arranged to interrupt a corresponding rotor conductor of the rotor when controlled to be non-conducting; and each switch of the second set of switches is arranged to allow induced current to flow through an interrupted rotor conductor of the rotor by providing a bypass current path through a corresponding resistive element of the set of resistive elements when controlled to be conducting.

Example 5: The combined induction-type electrical machine and braking arrangement of example 4, wherein: the rotor is a squirrel cage rotor, where each rotor conductor is provided in the form of a conducting bar extending between a first end ring and a second end ring; and each switch of the first set of switches is arranged along a corresponding conducting bar.

Example 6: The combined induction-type electrical machine and braking arrangement of example 5, wherein each switch is implemented as a temperature dependent switch, for example a bimetal switch.

Example 7: The combined induction-type electrical machine and braking arrangement of example 4, wherein: the rotor conductors are rotor windings; the combined induction-type electrical machine and braking arrangement comprises slip rings mounted on a rotor shaft and connected to the rotor windings; and the set of resistive elements, the first set of switches, and the second set of switches are arranged outside the rotor and connected to respective slip rings by means of sliding connections.

Example 8: The combined induction-type electrical machine and braking arrangement of example 2, wherein: the rotor comprises a first set of rotor conductors, each exhibiting a first rotor conductor resistance, and a second set of rotor conductors, each exhibiting a second rotor conductor resistance, higher than the first rotor conductor resistance; each switch of the first set of switches is arranged to interrupt a corresponding rotor conductor of the first set of rotor conductors when controlled to be non-conducting; and each switch of the second set of switches is arranged to interrupt a corresponding rotor conductor of the second set of rotor conductors when controlled to be non-conducting.

Example 9: The combined induction-type electrical machine and braking arrangement of example 8, wherein: each rotor conductor of the first set of rotor conductors is made of copper or aluminum; and each rotor conductor of the second set of rotor conductors is made of iron or steel.

Example 10: The combined induction-type electrical machine and braking arrangement of example 8 or 9, wherein: the rotor is a squirrel cage rotor, where each rotor conductor of the first set of rotor conductors is provided in the form of a first conducting bar extending between a first end ring and a second end ring, and each rotor conductor of the second set of rotor conductors is provided in the form of a second conducting bar extending between the first end ring and the second end ring; each switch of the first set of switches is arranged along a corresponding first conducting bar; and each switch of the second set of switches is arranged along a corresponding second conducting bar.

Example 11: The combined induction-type electrical machine and braking arrangement of example 10, wherein each switch is implemented as a temperature dependent switch, for example a bimetal switch.

Example 12: The combined induction-type electrical machine and braking arrangement of example 8 or 9, wherein: each rotor conductor of the first set of rotor conductors is provided in the form of a first rotor winding, and each rotor conductor of the second set of rotor conductors is provided in the form of a second rotor winding; the combined induction-type electrical machine and braking arrangement comprises a first set of slip rings mounted on a rotor shaft and connected to the first set of rotor windings, and a second set of slip rings mounted on a rotor shaft and connected to the second set of rotor windings; and the first set of switches are arranged outside the rotor and connected to respective slip rings of the first set of slip rings by means of sliding connections; and the second set of switches are arranged outside the rotor and connected to respective slip rings of the second set of slip rings by means of sliding connections.

Example 13: The combined induction-type electrical machine and braking arrangement of any of examples 1-12, wherein the controller is configured to control the configuration switching arrangement from the first configuration to the second configuration by providing a stator current pulse.

Example 14: The combined induction-type electrical machine and braking arrangement of any of examples 1-13, wherein the controller is configured to control the configuration switching arrangement from the second configuration to the first configuration in response to a propulsion command.

Example 15: The combined induction-type electrical machine and braking arrangement of example 14, wherein the controller is configured to control the configuration switching arrangement from the second configuration to the first configuration by providing a stator current pulse.

Example 16: A vehicle comprising: a body; at least one wheel; and the combined induction-type electrical machine and braking arrangement of any of examples 1-15, wherein the stator of the combined induction-type electrical machine and braking arrangement is coupled to the body of the vehicle, and the rotor of the combined induction-type electrical machine and braking arrangement is coupled to the at least one wheel.

Example 17: A computer-implemented method, comprising: receiving a braking command for braking at least one wheel of a vehicle; controlling, in response to the braking command, the configuration switching arrangement of the combined induction-type electrical machine and braking arrangement of any of examples 1-15 from the first configuration to the second configuration in response to the braking command.

Example 18: The method of example 17, comprising: receiving a propulsion command for propelling the at least one wheel of the vehicle; and controlling, in response to the propulsion command, the configuration switching arrangement of the combined induction-type electrical machine and braking arrangement of any of examples 1-15 from the second configuration to the first configuration in response to the propulsion command.

Example 19: A computer program product comprising program code for performing, when executed by processing circuitry comprised in the controller of the combined induction-type electrical machine and braking arrangement of any of examples 1-15, the method of example 17 or 18.

Example 20: A non-transitory computer-readable storage medium comprising instructions, which when executed by processing circuitry comprised in the controller of the combined induction-type electrical machine and braking arrangement of any of examples 1-15, cause the processing circuitry to perform the method of example 17 or 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A combined induction-type electrical machine and braking arrangement (19) for use in a heavy vehicle (3), comprising:
a stator (23) configured to be coupled to a body (7) of the vehicle (3), the stator comprising stator windings;
a rotor (25) configured to be coupled to at least one wheel (9) of the vehicle (3), the rotor (25) comprising rotor conductors (31a-c; 41a-c; 43a-c);
a configuration switching arrangement (33) coupled to the rotor conductors (31a-c; 41a-c; 43a-c) of the rotor (25) and controllable to switch between:
a first configuration in which induced current flowing through the rotor conductors (31a-c; 41a-c; 43a-c) experiences a first total resistance; and
a second configuration in which induced current flowing through the rotor conductors (31a-c; 41a-c; 43a-c) experiences a second total resistance, higher than the first total resistance; and
a controller (29) configured to control the configuration switching arrangement (33) from the first configuration to the second configuration in response to a braking command.

2. The combined induction-type electrical machine and braking arrangement (19) of claim 1, wherein:
the configuration switching arrangement (33) comprises a first set of switches (35a-c) and a second set of switches (37a-c);
the first configuration is achieved by controlling the first set of switches (35a-c) to be conducting and the second set of switches (37a-c) to be non-conducting, thereby allowing the induced current to flow through a first current path defined by the first set of switches (35a-c); and
the second configuration is achieved by controlling the first set of switches (35a-c) to be non-conducting and the second set of switches (37a-c) to be conducting, thereby allowing the induced current to flow through a current path defined by the second set of switches (37a-c).

3. The combined induction-type electrical machine and braking arrangement (19) of claim 2, wherein:
the configuration switching arrangement (33) comprises a set of resistive elements (39a-c);
each switch of the first set of switches (35a-c) is arranged to short-circuit a corresponding resistive element (39a-c) of the set of resistive elements when controlled to be conducting; and
each switch of the second set of switches (37a-c) is arranged to allow current to flow through a corresponding resistive element (39a-c) of the set of resistive elements when controlled to be conducting.

4. The combined induction-type electrical machine and braking arrangement (19) of claim 3, wherein:
the set of resistive elements (39a-c) comprises at least one resistive element for each rotor conductor (31a-c; 43a-c) of the rotor (25);
each switch of the first set of switches (35a-c) is arranged to interrupt a corresponding rotor conductor (31a-c; 43a-c) of the rotor (25) when controlled to be non-conducting; and
each switch of the second set of switches (37a-c) is arranged to allow induced current to flow through an interrupted rotor conductor (31a-c; 43a-c) of the rotor (25) by providing a bypass current path through a corresponding resistive element of the set of resistive elements (39a-c) when controlled to be conducting.

5. The combined induction-type electrical machine and braking arrangement (19) of claim 4, wherein:
the rotor (25) is a squirrel cage rotor, where each rotor conductor is provided in the form of a conducting bar (31a-c) extending between a first end ring (32a) and a second end ring (32b); and
each switch of the first set of switches (35a-c) is arranged along a corresponding conducting bar (31a-c).

6. The combined induction-type electrical machine and braking arrangement (19) of claim 5, wherein each switch is implemented as a temperature dependent switch, for example a bimetal switch.

7. The combined induction-type electrical machine and braking arrangement of claim 4, wherein:
the rotor conductors are rotor windings (43a-c);
the combined induction-type electrical machine and braking arrangement (19) comprises slip rings (45a-c) mounted on a rotor shaft (27) and connected to the rotor windings (43a-c); and
the set of resistive elements (39a-c), the first set of switches (35a-c), and the second set of switches (37a-c) are arranged outside the rotor (25) and connected to respective slip rings (45a-c) by means of sliding connections.

8. The combined induction-type electrical machine and braking arrangement (19) of claim 2, wherein:
the rotor (25) comprises a first set of rotor conductors (3 1a-c), each exhibiting a first rotor conductor resistance, and a second set of rotor conductors (41a-c), each exhibiting a second rotor conductor resistance, higher than the first rotor conductor resistance;
each switch of the first set of switches (35a-c) is arranged to interrupt a corresponding rotor conductor of the first set of rotor conductors (3 1a-c) when controlled to be non-conducting; and
each switch of the second set of switches (37a-c) is arranged to interrupt a corresponding rotor conductor of the second set of rotor conductors (41a-c) when controlled to be non-conducting.

9. The combined induction-type electrical machine and braking arrangement (19) of claim 8, wherein:
each rotor conductor of the first set of rotor conductors (3 1a-c) is made of copper or aluminum; and
each rotor conductor of the second set of rotor conductors (41a-c) is made of iron or steel.

10. The combined induction-type electrical machine and braking arrangement (19) of claim 8 or 9, wherein:
the rotor (25) is a squirrel cage rotor, where each rotor conductor of the first set of rotor conductors (3 1a-c) is provided in the form of a first conducting bar extending between a first end ring (32a) and a second end ring (32b), and each rotor conductor of the second set of rotor conductors (41a-c) is provided in the form of a second conducting bar extending between the first end ring (32a) and the second end ring (32b);
each switch of the first set of switches (35a-c) is arranged along a corresponding first conducting bar; and
each switch of the second set of switches (37a-c) is arranged along a corresponding second conducting bar.

11. The combined induction-type electrical machine and braking arrangement (19) of claim 8 or 9, wherein:
each rotor conductor of the first set of rotor conductors is provided in the form of a first rotor winding, and each rotor conductor of the second set of rotor conductors is provided in the form of a second rotor winding;
the combined induction-type electrical machine and braking arrangement (19) comprises a first set of slip rings mounted on a rotor shaft (27) and connected to the first set of rotor windings, and a second set of slip rings mounted on a rotor shaft and connected to the second set of rotor windings; and
the first set of switches are arranged outside the rotor and connected to respective slip rings of the first set of slip rings by means of sliding connections; and
the second set of switches are arranged outside the rotor and connected to respective slip rings of the second set of slip rings by means of sliding connections.

12. The combined induction-type electrical machine and braking arrangement (19) of any of claims 1-11, wherein the controller (29) is configured to control the configuration switching arrangement (33) from the first configuration to the second configuration by providing a stator current pulse.

13. A vehicle (3) comprising:
a body (7);
at least one wheel (9); and
the combined induction-type electrical machine and braking arrangement (19) of any of claims 1-12,
wherein the stator (23) of the combined induction-type electrical machine and braking arrangement (19) is coupled to the body (7) of the vehicle (3), and the rotor (25) of the combined induction-type electrical machine and braking arrangement (19) is coupled to the at least one wheel (9).

14. A computer-implemented method, comprising:
receiving (S81) a braking command for braking at least one wheel (9) of a vehicle (3);
controlling (S82), in response to the braking command, the configuration switching arrangement (33) of the combined induction-type electrical machine and braking arrangement (19) of any of claims 1-12 from the first configuration to the second configuration in response to the braking command.

15. A computer program product comprising program code for performing, when executed by processing circuitry comprised in the controller (29) of the combined induction-type electrical machine and braking arrangement (19) of any of claims 1-12, the method of claim 14.
